# EUROPEAN PATENT SPECIFICATION

(11) **EP 1 176 063 B1**
(45) Date of publication and mention of the grant of the patent: **29.11.2006**
(21) Application number: 01115606.4
(22) Date of filing: 02.07.2001
(51) Int. Cl.: B60R 22/46

(54) **Seat belt retractor**
Sicherheitsgurtaufroller
Rétracteur de ceinture de sécurité

(30) Priority: 25.07.2000 JP 2000223999
(43) Date of publication of application: 30.01.2002
(73) Proprietor: TAKATA CORPORATION, Minato-ku, Tokyo 106-8510 (JP)
(72) Inventor: Shiotani, Masahiro, Minato-ku, Tokyo 106-8510 (JP); Mishina, Joji, Minato-ku, Tokyo 106-8510 (JP); Kanamori, Yasushi, Minato-ku, Tokyo 106-8510 (JP)
(74) Representative: Banzer, Hans-Jörg

(56) References cited:
- DE-A- 4 242 782
- DE-U- 20 003 453
- DE-U- 29 908 598
- FR-E- 80 832
- US-A- 2 634 991

## Description

### [Industrial Field of the Invention]

The present invention relates to a seat belt retractor for winding up a seat belt onto a rotational spool in which a gear having external teeth being not symmetrical about any plane passing through the axis is interfitted with the shaft of the spool.

### [Related Art]

A passenger car is normally equipped with seat belt devices for protecting occupants when the car experiences an abrupt deceleration. Such a seat belt device may include a pretensioner which takes up a predetermined amount of seat belt around an occupant to restrain the occupant with increased forces when an accident such as a vehicle collision is detected.

There are various types of pretensioners currently used. One known type of pretensioner comprising a pipe, a gas generator disposed on one end of the pipe, a piston arranged in the pipe, and balls arranged in the pipe, in which the balls are moved via the piston by gas pressure produced by the gas generator and are discharged through an outlet disposed at the other end of the pipe, and a pretensioner gear and a gear connected to a spool are meshed with each other and rotated by the balls being discharged, thereby pretensioning a seat belt.

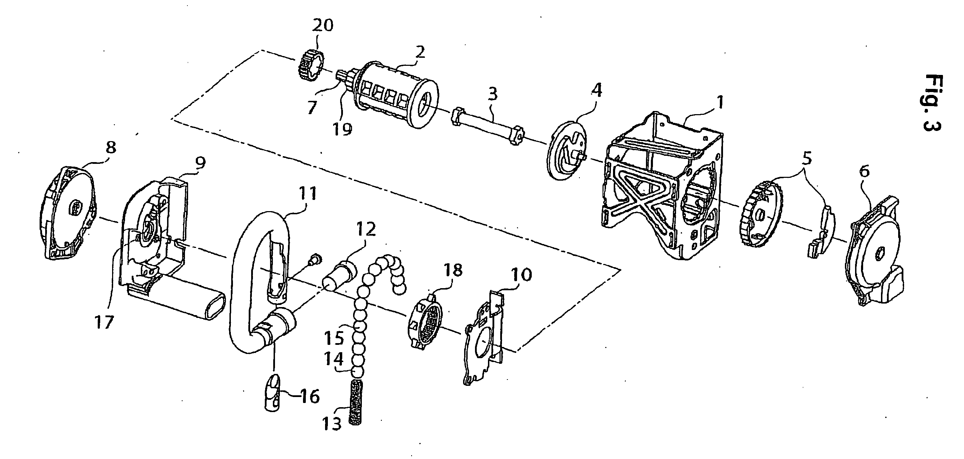

Fig. 3 is an exploded perspective view showing one example of seat belt retractor with a pretensioner of this type. The pretensioner shown in Fig. 3 is now developed and thus not known yet. It should be noted that some parts are not illustrated because these are not necessary for describing this invention.

This seat belt retractor comprises a base frame 1, a spool 2 housed in the base frame 1, and a seat belt (not shown) wound onto the spool 2. Therefore, the rotation of the spool 2 occurs the winding and unwinding of the seat belt. The spool 2 has a torsion bar 3 as its shaft, one end of which is supported to a retainer 6 via two locking mechanisms 4, 5.

The spool 2 has a gear 7 on one end thereof which is meshed with a gear in a return spring cover 8. Therefore, the spool 2 is biased in a belt-winding direction by a return spring in the return spring cover 8.

The seat belt retractor having the aforementioned basic structure is provided with a pretensioner. Hereinafter, the structure of the pretensioner will be described. The pretensioner comprises a pipe 11 between a pretensioner cover 9 and a pretensioner plate 10, and a gas generator 12 disposed on end of the pipe 11. Arranged inside the pipe 11 are a stopper spring 13, a piston 14, and a plurality of balls 15. The pipe 11 has a cut-out in a peripheral portion near the other end thereof and a guide block 16 is fitted into the other end of the pipe 11.

The pretensioner cover 9 is provided with two pins 17 by which a ring gear 18 is held. That is, the ring gear 18 is formed with holes into which the pins 17 are inserted. The front-most ball 15a is supported between one of the external teeth of the ring gear 18 and a portion of the inner wall of the pipe 11 facing to the cut-out.

On the other hand, a pinion 20 is arranged to be fitted to the gear 19 of the spool 2. In the normal state, the ring gear 18 and the pinion 20 are not meshed with each other. When gas is produced by the gas generator 12, however, the balls 15 are pushed via the piston 14 by the pressure of gas so that the pins 17 are sheared by forces from the balls, whereby the ring gear 18 is released to be free and thus moves to be meshed with the pinion 20, as will be described in detail later. The ring gear 18 in this state is forced to be rotated by the balls 15 so as to rotate the spool 2 via the pinion 20. In this manner, the seat belt is pretensioned.

### [Problems to be resolved by the Invention]

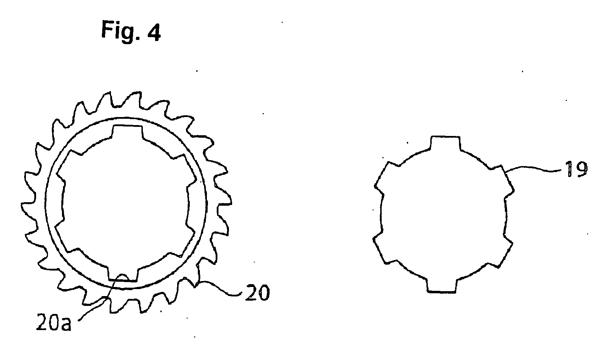

In the seat belt retractor having the aforementioned structure, these teeth of both the ring gear 18 and the pinion 20 are inclined in the opposite direction of the rotational direction to facilitate the mesh between the internal teeth of the ring gear 18 and the external teeth of the pinion 20. Accordingly, the external teeth of the pinion 20 have no symmetrical properties relative to any plane passing through the axis of the pinion 20 (i.e. the axis of the spool 2), i.e. are not symmetric, as shown in Fig. 4.

As shown in Fig. 4, the fitting periphery 20a on the inner surface of the pinion 20 and the outer periphery of the spool gear 19 have profiles having symmetrical properties relative to a predetermined plane about the axes of pinion 20 and the spool 2, i.e. the fitting periphery 20a and the outer periphery of the spool gear are both axisymmetric, and the profiles of the fitting periphery20a and the outer periphery of the spool gear 19 extend parallel to the axes. In this case, workers for assembly should pay attention to the direction of the pinion 20 when putting the pinion 20 onto the spool gear 19, because they may occasionally put the pinion wrong side out. In this case, the inclination of the external teeth of the pinion is reversed, whereby the pinion can not be securely meshed with the internal teeth of the ring gear 18.

DE 200 03 453 U1 discloses a seat belt retractor according to the preamble of claim 1.

US 2,634,991 relates to shafts and other machine elements such as pulleys, gears, wheels and the like which may be coupled or mated thereto for transmission of power by angular motion. In this respect, inter alia a coupling between a shaft and a hub of a wheel, gear or pulley is shown, wherein the shaft is tapered in its longitudinal direction.

The present invention was made taking the aforementioned circumstances into consideration and the object of this invention is to provide a seat belt retractor having a structure preventing a gear, just like the pinion 20 in the aforementioned example, having external teeth without axisymmetric section from being mistakenly assembled to a spool.

### [Means to Solve the Problems]

According to the present invention, the above problem is solved by a seat belt retractor according to claim 1. Claim 2 defines a seat belt device comprising such a seat belt retractor.

The means of achieving the aforementioned object is a seat belt retractor for winding up a seat belt by the rotation of a spool, including a gear having external teeth being not symmetrical about any plane passing through an axis thereof wherein said gear is interfitted with the shaft of said spool, and wherein fitting portions between the shaft of said spool and said gear are configured not to be symmetrical about a plane at the center between one end face of said gear facing the spool and another end face of said gear opposite to said spool.

In this means, the fitting portions between the shaft of the spool and the gear are configured not to be symmetrical relative to the plane at the center between one side facing the spool and the other side of said gear. Therefore, even by taking an action of fitting the gear to the shaft of the spool wrong side out when assembly, the opening of the gear and the periphery of the spool never be fitted to each other so as not to allow the interfit between the gear and the spool. The mistake assembly can be prevented without special attention.

### [Brief Explanation of the drawings]

Figs. 1(a1)-(c2) show a conventional configuration of a pinion and a spool gear.
Fig. 2 is a view showing a sectional configuration of the pinion 20 of an embodiment of the present invention.
Fig. 3 is an exploded perspective view showing an example of a seat belt retractor having the pretensioner.
Fig. 4 is a view showing the configurations of conventional examples of a pinion and a spool gear.

### [Embodiments for carrying out the Invention]

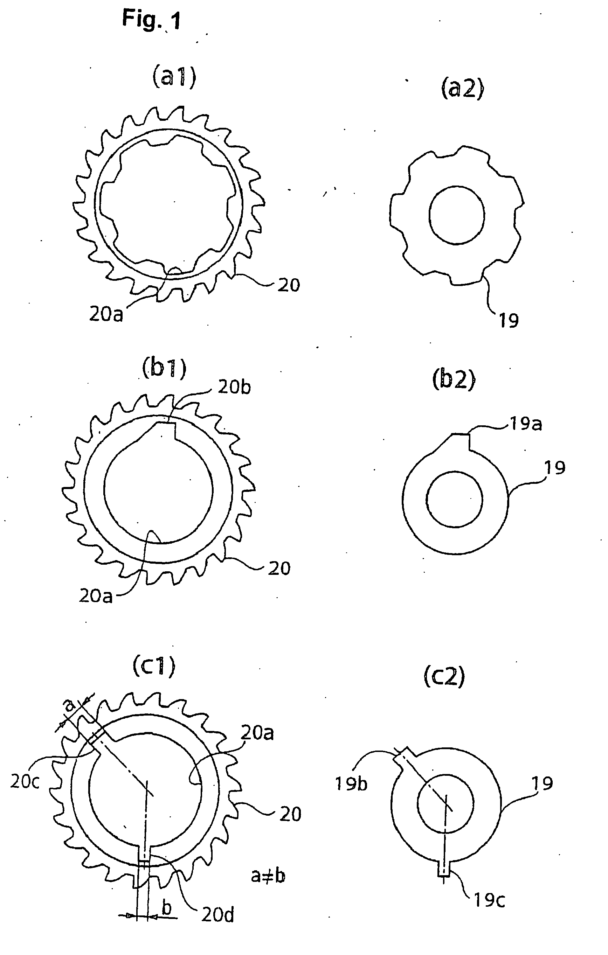

Figs. 1(a1)-(c2) show configuration of a pinion 20 (corresponding to the pinion 20 shown in Fig. 3) and a spool gear 19 (corresponding to the spool gear 19 shown in Fig. 3) of a conventional seat belt retractor, similar to the one known from DE 200 03 453 U1.

In Figs. 1(a1) and 1(a2), concavities and convexities of the fitting periphery 20a inside the pinion 20 and the outer periphery of the spool gear 19 which can be interfitted with the concavities and convexities of the fitting periphery 20a are inclined in the circumferential direction and thus are not symmetrical about any plane passing through the axis. Therefore, even by taking an action of fitting the pinion 20 to the spool gear 19 wrong side out, the pinion 20 and the spool gear 19 never be interfitted with each other, thereby preventing the mistake assembly.

In Figs. 1(b1) and 1(b2), the fitting periphery 20a inside the pinion 20 is formed with one concavity 20b and, on the other hand, the outer periphery of the spool gear 19 is formed with one fitting convexity 19a corresponding to the concavity 20b. The concavity 20b and the convexity 19a are formed so that lateral sides thereof are not symmetrical about any plane passing through the center axis. Therefore, even by taking an action of fitting the pinion 20 to the spool gear 19 wrong side out, the pinion 20 and the spool gear 19 never be interfitted with each other, thereby preventing the mistake assembly.

In Figs. 1(c1) and 1(c2), the fitting periphery 20a inside the pinion 20 is formed with two concavities 20c, 20d and, on the other hand, the outer periphery of the spool gear 19 is formed with two fitting convexities 19b, 19c corresponding to the concavities 20c, 20d. There is a differential between the width *a* of the concavity 20c, the convexity 19b and the width b of the concavity 20d, the convexity 19c so that the pinion 20 and the spool gear 19 are configured not to be symmetrical about any plane passing through the central axis. Therefore, even by taking an action of fitting the pinion 20 to the spool gear 19 wrong side out, the pinion 20 and the spool gear 19 never be interfitted with each other, thereby preventing the mistake assembly.

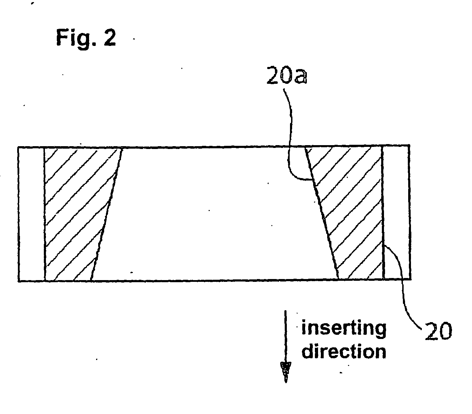

Fig. 2 is a view showing a sectional configuration of the pinion 20 of the present invention. In this embodiment, the fitting periphery 20a inside the pinion 20 extends not parallel to the axis. As mentioned, the fitting periphery 20a of the pinion 20 which are fitted to the spool gear 19 is formed such that an end face of the pinion 20 at the spool side is not symmetrical about a plane to the other end face of the pinion at the side opposite to the spool and the outer periphery of the spool gear 19 is formed corresponding to the configuration of the fitting periphery 20a of the pinion 20. Therefore, even by taking an action of fitting the opinion 20 to the spool gear 19 wrong side out, the pinion 20 and the spool gear 19 never be interfitted with each other, thereby preventing the mistake assembly.

### [Effects of the Invention]

As described above, according to the present invention, even by taking an action of fitting a gear to a spool shaft wrong side out, an opening of the gear and the periphery of the spool shaft never be fitted to each other so as not to allow the interfit between the gear and the spool shaft. The mistake assembly can be prevented without special attention.

## Claims

1. A seat belt retractor for winding up a seat belt, comprising
a spool (2) for winding up the seat belt by the rotation of said spool, and
a gear (20) having external teeth being not symmetrical about any plane passing through an axis thereof,
wherein said gear (20) is interfitted with a shaft (19) of said spool (2),
**characterized in that**
fitting portions (20a-20d) between the shaft (19) of said spool (2) and said gear (20) are configured not to be symmetrical about a plane at the center between one end face of said gear (20) facing said spool (2) and another end face of said gear (20) opposite to said spool (2).

2. A seat belt device, comprising
a seat belt, and
a seat belt retractor according to claim 1.

## Patentansprüche

1. Sitzgurtaufrollvorrichtung zum Aufwickeln eines Sitzgurtes, umfassend
eine Spule (2) zum Aufwickeln des Sitzgurtes durch die Drehung der Spule, und
ein Getriebe (20), welches äußere Zähne aufweist, welche nicht symmetrisch zu irgendeiner Ebene sind, welche durch eine Achse davon verläuft,
wobei eine Welle (19) der Spule (2) zwischen das Getriebe (20) eingepasst ist,
**dadurch gekennzeichnet,**
**dass** Anpassungsabschnitte (20a-20d) zwischen der Welle (19) der Spule (2) und dem Getriebe (20) derart ausgestaltet sind, dass sie nicht symmetrisch bezüglich einer Ebene bei der Mitte zwischen einer Endseite des Getriebes (20), welche der Spule (2) gegenüberliegt, und einer anderen Endfläche des Getriebes (20), welche von der Spule (2) entfernt liegt, ist.

2. Sitzgurtvorrichtung umfassend
einen Sitzgurt, und
eine Sitzgurtaufrollvorrichtung nach Anspruch 1.

## Revendications

1. Un enrouleur de ceinture de sécurité pour l'enroulement d'une ceinture de sécurité, comprenant:
- une bobine (2) pour l'enroulement de la ceinture de sécurité par la rotation de ladite bobine, et
- une roue dentée (20) ayant des dents externes, non symétriques par rapport à un plan quelconque passant par un axe de celle-ci,
dans laquelle ladite roue dentée (20) est adaptée à un arbre (19) de ladite bobine (2),
**caractérisé en ce que**,
- des parties qui s'imbriquent (20a, 20b), entre l'arbre (19) de ladite bobine (2) et ladite roue dentée (20), sont configurées de façon non symétriques par rapport à un plan passant au centre, entre une face d'extrémité de ladite roue dentée (20), tournée vers ladite bobine (2), et une autre face d'extrémité de ladite roue dentée (20), opposée à ladite bobine (2).

2. Un dispositif à ceinture de sécurité, comprenant
- une ceinture de sécurité, et
- un enrouleur de ceinture de sécurité selon la revendication 1.
